# DEMANDE DE BREVET EUROPEEN

(11) **EP 0 523 274 A1**
(43) Date de publication de la demande: **20.01.1993**
(21) Numéro de dépôt: 91112092.1
(22) Date de dépôt: 19.07.1991
(51) Int. Cl.: A23L 1/217

(54) **Procédé pour la fabrication de frites précuites congelées et produit obtenu**

(71) Demandeur: FRISCO-FINDUS AG, CH-9400 Rorschach (CH)
(72) Inventeur: Baranger, Jean, F-60000 Beauvais (FR)

(57) **Abrégé**

Des pommes de terre sont pelées et découpées en bâtonnets puis subissent un premier blanchiment à l'eau. Dans un deuxième temps, les bâtonnets subissent un second blanchiment joint à une déshydratation par traitement à l'air humide chaud. Le produit est ensuite équilibré puis frit à l'huile et enfin congelé.

Application à la fabrication de frites précuites congelées rapidement régénérables.

## Description

La présente invention est relative à un procédé pour la fabrication de frites précuites congelées et au produit obtenu.

On connaît, par le document GB 1.255.573 un procédé dans lequel des pommes de terre sont pelées et découpées en morceaux de 3/16 à 9/16 de pouce. Le produit obtenu est ensuite lavé pour éliminer l'amidon en surface. Ensuite, les morceaux sont trempés dans une solution contenant un inhibiteur de décoloration.

Les morceaux sont ensuite déshydratés, sans blanchiment préalable, pour obtenir une perte de poids de l'ordre de 10 à 30% en poids. Le produit déshydraté est ensuite blanchi à la vapeur. Lors de ce blanchiment, il se produit une réhydratation partielle et la perte de poids, par rapport au produit de base, est finalement de l'ordre de 16% en poids.

Le produit subit ensuite une préfriture, pendant 30 à 90 secondes dans un bain d'huile, à une température comprise entre 150°C et 205°C, puis est congelé.

Les frites obtenues peuvent ensuite être régénérées par immersion dans un bain d'huile pendant une durée comprise entre 90 secondes et 180 secondes à une température comprise entre 160°C et 190°C.

Préférablement la friture finale, avant consommation est réalisée à environ 175°C pendant 135 secondes.

On connaît par ailleurs, par le document US 3.397.993 un procédé dans lequel des pommes de terre sont découpées en morceaux d'un quart à un demi pouce de section, puis lavées pour éliminer l'amidon en surface et éviter un collage lors du traitement ultérieur. Les morceaux sont ensuite blanchis à la vapeur ou à l'eau bouillante pendant 2 à 10 minutes. Puis les morceaux sont déshydratés par circulation d'air chaud pendant 5 à 20 minutes pour entraîner une diminution de poids de 20% à 30% en poids. Ensuite les morceaux sont plongés dans l'huile pendant environ 15 à 60 secondes à une température de l'ordre de 150°C à 190°C puis congelés.

Les frites obtenues peuvent ensuite être consommées par régénération dans un bain d'huile à une température de 150°C à 190°C pendant 90 à 210 secondes.

Le problème de la rapidité de la régénération des frites congelées dans un bain d'huile est particulièrement important . En effet, ce temps de régénération conditionne la taille des installations et la longueur des files d'attente dans le cadre de la restauration rapide.

Malgré tout, cette notion de temps de régénération est tout à fait relative. Il est en effet toujours possible de régénérer des frites congelées en moins de 2 minutes. Le problème se situe en fait au niveau des qualités organoleptiques du produit obtenu.

En effet, si on veut diminuer le temps de régénération, une solution a priori évidente consiste à augmenter le temps de préfriture, avant congélation.

Or, il a été trouvé qu'une simple augmentation du temps de préfriture conduit à un produit non satisfaisant. Plus particulièrement, la texture est caoutchouteuse et la surface craquelée et trop dure. De même, une augmentation de l'efficacité de la déshydratation entraîne la création d'une peau très sèche avec un centre réduit à l'état de purée qui rend le produit tout à fait impropre à une utilisation ultérieure.

C'est ainsi que dans le procédé habituellement utilisé, des pommes de terre, après avoir été découpées en bâtonnets de 0,3 pouce de côté, sont blanchies à l'eau à 76-82°C pendant 3,5 minutes puis séchées, dans un premier temps, à l'air ambient pendant 5 minutes et, dans un deuxième temps, à l'air chaud pendant 10 minutes à une température comprise entre 82°C et 115°C. Les bâtonnets sont alors frits dans un bain d'huile pendant 45 secondes à 185-190°C puis congelés. Les frites sont ensuite régénérées par immersion pendant 2 minutes 15 secondes dans un bain d'huile à 170°C. Il est ainsi obtenu un produit final ayant une teneur en matière sèche comprise entre 55% et 60% en poids et une teneur en matière grasse comprise entre 12% et 15% en poids, ces caractéristiques du produit final constituant un standard que tout autre procédé devra permettre d'atteindre.

La présente invention a aussi pour but de proposer un procédé de fabrication de frites précuites congelées régénérables en moins de 2 minutes et qui présentent des qualités organoleptiques identiques à celle obtenues par le procédé classique décrit ci-dessus.

La présente invention a ainsi pour objet un procédé pour la fabrication de frites précuites congelées dans lequel des pommes de terre pelées et découpées en bâtonnets subissent un premier blanchiment à l'eau puis, par traitement à l'air humide chaud, subissent un second blanchiment joint à une déshydratation, puis une phase d'équilibrage suivie d'une préfriture à l'huile et enfin une congélation.

Il a en effet été constaté deux faits importants.

En premier lieu, il n'est pas possible d'obtenir un blanchiment suffisamment rapide en ne traitant qu'à l'air humide chaud et, en second lieu, le fait de déshydrater, et blanchir, à l'air humide chaud entraîne l'obtention d'un produit déshydraté qui ne présente pas les défauts apparaissant normalement lorsqu'on augmente l'efficacité de la déshydratation.

Il est donc possible, par ce biais de réduire la teneur en eau des pommes de terre à un niveau suffisant pour autoriser ensuite une friture finale, après congélation, d'une durée plus courte, en obtenant par ailleurs un produit d'une qualité identique à celle des produits obtenus dans l'art antérieur utilisant une régénération par friture à l'huile du produit congelé de plus de 2 minutes.

La présente invention a aussi pour objet des frites précuites congelées présentant une teneur en matière grasse comprise entre 7,5 et 10% en poids et une teneur en matière sèche comprise entre 42% et 46% en poids.

D'autres caractéristiques et avantages ressortiront à la suite de la description qui va suivre.

Dans le procédé selon l'invention, des pommes de terre sont d'abord pelées et découpées en bâtonnets, par exemple de section carrée de 0,3 pouce de côté.

Ensuite ces bâtonnets sont blanchis à l'eau chaude, de préférence à une température comprise entre 78 et 80°C pendant une durée de 3 à 4 minutes.

Pour éviter une poursuite du blanchiment lors du transfert des bâtonnets vers la phase de traitement à l'air humide, il peut être utile de refroidir le produit à 25°C -30°C. Ceci est particulièrement utile quant les conditions de transfert ne sont pas maîtrisées, celui-ci pouvant être, en particulier, plus ou moins long.

Les bâtonnets de pomme de terre sont ensuite traités à l'air humide. Un air humide est toujours caractérisé par sa température sèche et sa température humide. Pour permettre la poursuite du blanchiment lors de ce traitement, il convient d'avoir une température humide supérieure à 70°C. Préférentiellement, la température humide est choisie égale à 75°C et devra être inférieure dans tous les cas à 90°C pour éviter une détérioration du produit.

La température sèche, qui détermine la déshydratation est choisie entre 110°C et 140°C. Ainsi l'humidité relative est elle comprise entre 10% et 30%.

La durée du traitement, fonction bien sur de la température sèche qui détermine la déshydratation, peut être comprise entre 5 et 15 minutes.

Après cela, les bâtonnets de pommes de terre subissent une phase d'équilibrage. En effet, lors du traitement à l'air humide, une peau apparaît à la surface du produit. Ce phénomène est réversible et il convient de supprimer au moins partiellement cette peau qui, autrement, entraîne l'apparition de bulles et de cloques à la surface du produit lors de la friture.

Une solution pour faire disparaître cette peau consiste à permettre une homogénéisation de la teneur en eau dans le bâtonnet par diffusion de l'humidité du coeur du bâtonnet vers sa surface. Cette étape, dans le reste de la description , sera appelée l'équilibrage.

Pour éviter une perte de poids trop importante lors de cet équilibrage, les bâtonnets peuvent être placés dans des sacs plastiques ou dans des enceintes confinées, ce qui évite une évaporation trop importante et non maîtrisée.

Un équilibrage sans refroidissement du produit ne permet qu'une élimination temporaire de la peau. En effet une fois que les bâtonnets ont été équilibrés, par exemple pendant 10 minutes, la peau se reforme quand le produit est ressorti du sac plastique. En effet, le produit étant encore très chaud l'évaporation continue et une peau est recréée.

Une solution palliative peut résider dans un temps d'équilibrage suffisamment long pour que le produit placé à l'intérieur des sacs se refroidisse jusqu'à atteindre une température où l'évaporation devient impossible, ou négligeable, et à sortir ensuite le produit des dits sacs.

Une autre solution peut consister en la réalisation de la préfriture des bâtonnets immédiatement après l'équilibrage, en ne laissant pas le temps au produit de s'évaporer.

Mais, en pratique, les conditions de transfert entre l'équilibrage et la préfriture ne sont pas maîtrisées, il est alors très préférable de refroidir le produit, soit avant soit après l'équilibrage de manière à ce que, une fois que la peau créée préalablement lors du traitement à l'air humide chaud a été supprimée par l'équilibrage, celle ci ne puisse plus se reformer.

Un refroidissement après équilibrage, après sortie du produit hors des sacs plastiques, peut être réalisé par courant d'air à 25-30°C. Ce procédé engendre malgré tout une peau très fine sur les bâtonnets qui peut, dans certaines conditions, être bénéfique pour la suite du procédé. En effet, cette peau fine permet de conférer au produit final un caractère croustillant.

Une autre solution consiste en fait à refroidir le produit avant son équilibrage par courant d'air à 25-30°c pendant 30 secondes. Le produit est ensuite mis en sac pendant environ 10 minutes. A la fin de l'équilibrage le produit est suffisamment froid pour qu'une évaporation ultérieure ne soit plus possible.

Les bâtonnets équilibrés sont alors préfrits pendant une durée de 40 à 60 secondes dans un bain d'huile à environ 170°-190°C.

Des essais ont été réalisés dans lesquels la température humide a été fixée à 75°C, le temps de préfriture était de 60 secondes dans une huile à 185°C-190°C et le temps de friture finale (régénération), après congélation et juste avant consommation, était de 90 secondes à 170°C.

Le tableau ci-après résume ces essais.

| Essai | 1 | 2 | 3 | 4 | 5 | 6 | 7 |
|---|---|---|---|---|---|---|---|
| Température sèche (°C) | 110 | 110 | 120 | 120 | 120 | 130 | 140 |
| Durée (minutes) | 13 | 9 | 7 | 8 | 8 | 6,5 | 6 |
| Prérefroidissement (secondes) | | 30 | 30 | | 30 | 30 | 30 |
| Equilibrage (minutes) | 5 | 10 | 10 | 10 | 10 | 10 | 10 |
| Refroidissement (secondes) | 30 | | | 30 | | | |
| Matière sèche après congélation (% poids) | 44,40 | 42,40 | 46,28 | 44,61 | 45,50 | 43,81 | 42,40 |
| Matière grasse après congélation (% poids) | 8,05 | 8,13 | 9,54 | 8,35 | 7,49 | 9,18 | 8,13 |
| Matière sèche après régénération (% poids) | 58,22 | 59,84 | 57,74 | 57,85 | 59,15 | 57,90 | 59,77 |
| Matière grasse après régénération (% poids) | 15,37 | 15,11 | 13,65 | 14,39 | 13,02 | 12,01 | 17,68 |

On voit ainsi clairement qu'il est possible par ce procédé d'obtenir un produit final, après régénération en 90 secondes à 170°C, présentant des taux de matière grasse et de matière sèche identiques à ceux obtenus dans les procédés classiques.

Ceci est rendu possible par la production de frites précuites congelées présentant une teneur en matière sèche comprise entre 42% et 46% en poids et une teneur en matière grasse comprise entre 7,5% en poids et 10% en poids.

Par ailleurs, la texture est équivalente à celle obtenue par le procédé classique.

Le tableau ci-dessous illustre l'influence de la préfriture (avant congélation) sur la teneur en matière sèche et en matière grasse du produit final.

Dans cette série d'exemples des bâtonnets de pommes de terre de section carrée d'un quart de pouce de côté ont été blanchis pendant 210 secondes à 78°C puis traités à l'air humide à une température sèche de 145°C et une température humide de 85°C pendant 7,5 minutes. Les bâtonnets ont ensuite été frits dans un bain d'huile à 185-190°C.

| Temps de préfriture (secondes) | Matière sèche du produit congelé (% poids) | Matière grasse du produit congelé (% poids) |
|---|---|---|
| 45 | 39,8 | 8,7 |
| 60 | 44,6 | 8,7 |
| 75 | 46,6 | 9,0 |
| 90 | 51,0 | 10,6 |

## Revendications

1. Procédé pour la fabrication de frites précuites congelées dans lequel des pommes de terre pelées et découpées en bâtonnets subissent un premier blanchiment à l'eau puis, par traitement à l'air humide chaud, subissent un second blanchiment joint à une déshydratation, puis une phase d'équilibrage suivie d'une préfriture à l'huile et enfin une congélation.

2. Procédé selon la revendication 1 dans lequel les bâtonnets traités à l'air humide sont refroidis, jusqu'à une température empêchant l'évaporation, avant la préfriture.

3. Procédé selon la revendication 2 dans lequel le refroidissement est réalisé après la phase d'équilibrage.

4. Procédé selon la revendication 1 dans lequel le traitement à l'air humide chaud est réalisé pendant 5 à 15 minutes à une température sèche de 110°C à 140°C et une température humide supérieure à 70°C et inférieure à 90°C.

5. Frites précuites congelées présentant une teneur en matière grasse comprise entre 7,5% et 10% en poids et une teneur en matière sèche comprise entre 42% et 46% en poids.
